# EUROPÄISCHE PATENTSCHRIFT

(11) **EP 3 479 180 B1**
(45) Veröffentlichungstag und Bekanntmachung des Hinweises auf die Patenterteilung: **09.08.2023**
(21) Anmeldenummer: 17734243.3
(22) Anmeldetag: 20.06.2017
(51) Int. Cl.: G05B 19/042

(54) **SYSTEM VON AUTOMATISIERUNGSKOMPONENTEN UND VERFAHREN ZUM BETREIBEN**
SYSTEM OF AUTOMATION COMPONENTS AND METHOD FOR OPERATING THE SAME
SYSTÈME DE COMPOSANTS D'AUTOMATISATION ET PROCÉDÉ DE FONCTIONNEMENT

(30) Priorität: 04.07.2016 DE 102016008009
(43) Veröffentlichungstag der Anmeldung: 08.05.2019
(73) Patentinhaber: SEW-Eurodrive GmbH & Co, 76646 Bruchsal (DE)
(72) Erfinder: NORENBURG, Benjamin, 76689 Karlsdorf-Neuthard (DE); SENFT, Christian, 76185 Karlsruhe-Grünwettersbach (DE); RICHTER, Sebastian, 69120 Heidelberg (DE)
(86) Internationale Anmeldenummer: PCT/EP2017/025172
(87) Internationale Veröffentlichungsnummer: WO 2018/007019

(56) Entgegenhaltungen:
- WO-A1-2012/079902
- DE-A1-102006 019 542
- DE-A1-102006 019 542
- DE-A1-102010 062 908
- DE-A1-102013 211 582
- DE-A1-102013 211 582

## Beschreibung

Die Erfindung betrifft ein Verfahren zum Betreiben eines Systems von Automatisierungskomponenten einer Produktionsanlage.

Es ist bekannt, dass Eigenschaften einer Steuerungseinheit über ein Parametriergerät veränderbar sind.

Es ist weiter bekannt, dass von einem Parametriergerät ein Parameterdatensatz auf eine Steuerungseinheit übertragbar ist.

Es ist weiter bekannt, dass nach einem Tausch einer bereits parametrierten Steuerungseinheit die getauschte Steuerungseinheit erneut parametriert werden muss.

Aus der DE 10 2008 045 476 A1 ist auch bekannt, dass einzelne Komponenten eines Systems untereinander Informationen austauschen.

Aus der DE 103 50 715 A1 ist ein Verfahren zum Speichern von Parameterwerten auf einem internen und/oder externen Datenspeicher bekannt.

Aus der DE 10 2006 035 112 A1 ist bekannt, dass Systemkomponenten Geräteidentifikationsmerkmale enthalten, die bei einem Komponententausch einer Steuerungseinheit zur Verfügung gestellt werden.

Aus der DE 102 59 391 A1 ist eine ortsgebundene Anpassung einer intelligenten Einheit bekannt.

Aus der DE 10 2009 028 794 A1 ist eine Messvorrichtung zur Bestimmung einer physikalischen oder chemischen Messgröße eines Messmediums bekannt.

Aus der US 2002 / 0 169 914 A1 ist eine Identifizierungsvorrichtung für eine Netzwerkumgebung bekannt.

Aus der DE 199 60 870 A1 ist eine elektronische Schaltvorrichtung bekannt.

Aus der DE 10 2004 050 383 A1 ist eine Übertragung von Daten in Automatisierungskomponenten bekannt.

Aus der DE 10 2014 115 406 A1 ist ein System zur drahtlosen Konfiguration von Kleinsteuergeräten bekannt.

Aus der WO 2012 / 079902 A1 ist als nächstliegender Stand der Technik ein Verfahren zum Parametrieren eines Sicherheitsgeräts bekannt.

Aus der DE 10 2013 211 582 A1 ist ein Verfahren zur sicheren Parametrierung einer Automatisierungskomponente bekannt.

Aus der DE 10 2006 019 542 A1 ist ein Verfahren zum Betreiben einer Fertigungsmaschine bekannt.

Der Erfindung liegt daher die Aufgabe zugrunde, die Stillstandsdauer einer Produktionsanlage und somit die wirtschaftlichen Kosten zu minimieren.

Erfindungsgemäß wird die Aufgabe bei dem Verfahren nach den in Anspruch 1 angegebenen Merkmalen gelöst.

In der vorliegenden Erfindung wird das Problem einer erneuten Parametrierung beim Tausch einer, typischerweise defekten, Steuerungseinheit dadurch gelöst, dass bei

Erstinbetriebnahme und/oder bei jeder weiteren Änderung der Einstellparameter dieser Steuerungseinheit die Einstellparameter zusätzlich auf einem Datenspeicher, welcher sich typischerweise an oder in einem Umrichter und/oder an oder in einer übergeordneten Steuerung und/oder auf einem mit der Steuerung verbundenen PC befindet, gesichert werden.

Von diesem Datenspeicher aus sind die Einstellparameter für ein Tauschgerät wiederherstellbar, wobei die getauschte Steuerungseinheit nur mit einem speziell für diese Steuerungseinheit vorgesehenen Parameterdatensatz, der über die Identifikationsinformation eines externen, insbesondere räumlich außerhalb der Steuerungseinheit angeordnetem, ortsgebundenen, insbesondere mit einem spezifischen Punkt in der Anlage fest zuordenbaren, und mit dieser Steuerungseinheit direkt elektrisch leitend verbundenen Schlüsselspeichers erkennbar ist, ausführbar ist.

Ein System von Automatisierungskomponenten zur Durchführung des erfindungsgemäßen Verfahrens weist auf:
- eine Steuerungseinheit,
   wobei diese Steuerungseinheit einen Speicherbereich enthält, welcher einen Parameterdatensatz beinhaltet,
   wobei dieser Parameterdatensatz zum Betreiben dieser Steuerungseinheit benötigt wird,
- einen Schlüsselspeicher, der über eine eindeutig zuordenbare elektrisch leitende Verbindung mit der Steuerungseinheit verbindbar ist,
   wobei der Schlüsselspeicher ortsgebunden, insbesondere räumlich mit einem spezifischen Punkt in einem Gesamtsystem fest zuordenbar, ist,
   wobei der Schlüsselspeicher mindestens einen nichtflüchtigen Speicherbereich besitzt,
   wobei dieser Speicherbereich eine eindeutige Identifikationsinformation beinhaltet,
   wobei diese Identifikationsinformation von der Steuerungseinheit auslesbar ist - und einen externen Datenspeicher, auf den direkt, insbesondere über eine Steckverbindung, oder über ein Netzwerk, insbesondere ein Feldbussystem, zugreifbar ist,
   wobei dieser Datenspeicher mindestens einen nichtflüchtigen Speicherbereich besitzt,
   wobei dieser Speicherbereich mindestens einen Parameterdatensatz beinhaltet,
   wobei jeder der Parameterdatensätze mit je einer Identifikationsinformation eindeutig verknüpft ist
   und wobei Daten zwischen der Steuerungseinheit und dem externen Datenspeicher austauschbar sind. Von Vorteil ist dabei, dass die Identifikationsinformation der Steuerungseinheit unabhängig ist von der Steuerungseinheit selbst extern auf einem ortsgebundenen Schlüsselspeicher abgelegt, wodurch ein mit dieser Identifikationsinformation verknüpfter Parameterdatensatz von einem externen Datenspeicher wieder eindeutig einem Tauschgerät zuordenbar ist. Zusätzlich kann die Identifikationsinformation auch im EPLAN vermerkt werden und führt dazu, dass die Steuerungseinheit immer eindeutig referenziert werden kann, selbst nach einem Gerätetausch.

Somit werden also die Stillstandsdauer einer Produktionsanlage und somit die wirtschaftlichen Kosten minimiert, indem ein einfacher und zeitoptimierter Gerätetausch von Steuerungseinheiten, insbesondere von speicherprogrammierbaren Regelungs- und/oder Steuerungseinheiten, möglich ist.

Ein anderes System von Automatisierungskomponenten zur Durchführung des erfindungsgemäßen Verfahrens weist auf:
- eine erste Steuerungseinheit,
   wobei diese Steuerungseinheit einen zusätzlichen nichtflüchtigen Speicherbereich enthält,
   wobei dieser Speicherbereich das Geräteidentifikationsmerkmal der Steuerungseinheit beinhaltet,
- eine weitere Steuerungseinheit, die ebenfalls einen zusätzlichen nichtflüchtigen Speicherbereich enthält,
   wobei dieser Speicherbereich das Geräteidentifikationsmerkmal der Steuerungseinheit beinhaltet,
   wobei die Steuerungseinheiten und von unterschiedlichem Gerätetyp sind,
   wobei jedem dieser Gerätetypen eindeutig ein Geräteidentifikationsmerkmal zugeordnet ist,
   und wobei die Geräteidentifikationsmerkmale und verschieden sind,
- einen Schlüsselspeicher, der über eine eindeutig zuordenbare elektrisch leitende Verbindung mit den Steuerungseinheiten und verbindbar ist,
   wobei von den Steuerungseinheiten die im Schlüsselspeicher enthaltene Identifikationsinformation lesbar ist
   und wobei jeder Parameterdatensatz, der im externen Datenspeicher vorhanden ist, zusätzlich zur Identifikationsinformation mit je einem Geräteidentifikationsmerkmal verknüpft ist. Von Vorteil ist dabei, dass sich mehrere Steuerungseinheiten einen Schlüsselspeicher teilen, wodurch Reduktion der Anzahl benötigter Schlüsselspeicher möglich ist.

Ein weiteres System von Automatisierungskomponenten zur Durchführung des erfindungsgemäßen Verfahrens weist beispielsweise auf:
- eine erste Steuerungseinheit,
   wobei diese Steuerungseinheit einen zusätzlichen nichtflüchtigen enthält,
   wobei dieser Speicherbereich das Geräteidentifikationsmerkmal der Steuerungseinheit beinhaltet,
- eine weitere Steuerungseinheit, die ebenfalls einen zusätzlichen nichtflüchtigen Speicherbereich enthält,
   wobei dieser Speicherbereich das Geräteidentifikationsmerkmal der Steuerungseinheit beinhaltet,
   wobei die Steuerungseinheiten von unterschiedlichem Gerätetyp sind,
   wobei jedem dieser Gerätetypen eindeutig ein Geräteidentifikationsmerkmal zugeordnet ist, und wobei die Geräteidentifikationsmerkmale verschieden sind,
   wobei die Steuerungseinheit direkt leitend mit der weiteren Steuerungseinheit verbunden ist,
- einen Schlüsselspeicher, der über eine eindeutig zuordenbare elektrisch leitende Verbindung mit der Steuerungseinheit verbindbar ist,
   wobei von der Steuerungseinheit die im Schlüsselspeicher enthaltene Identifikationsinformation lesbar ist,
   wobei die Steuerungseinheit diese Identifikationsinformation der direkt verbundenen weiteren Steuerungseinheit zur Verfügung stellt,
   und wobei jeder Parameterdatensatz, der im externen Datenspeicher vorhanden ist, zusätzlich zur Identifikationsinformation mit je einem Geräteidentifikationsmerkmal verknüpft ist. Von Vorteil ist dabei, dass sich mehrere Steuerungseinheiten einen Schlüsselspeicher teilen, wodurch Reduktion der Anzahl benötigter Schlüsselspeicher möglich ist.

Bei einer vorteilhaften Ausgestaltung ist der Schlüsselspeicher in einem separaten Gehäuse, insbesondere in einem Dongle-Gehäuse, integriert ausgeführt,
wobei dieses separate Gehäuse nur ein Steckverbinderelement aufweist
und wobei dieses eine Steckverbinderelement direkt elektrisch leitend mit der Steuerungseinheit verbindbar ist. Von Vorteil ist dabei, dass der Schlüsselspeicher flexibel einsetzbar ist bei minimaler Baugröße des Steckverbinders.

Bei einer anderen vorteilhaften Ausgestaltung ist der Schlüsselspeicher in einem Anschlussstecker eines Verbindungskabels integriert ausgeführt,
wobei dieser Anschlussstecker über ein Steckverbinderelement direkt mit der Steuerungseinheit verbindbar ist,
wobei der Anschlussstecker zusätzlich eine Vorrichtung zum Aufnehmen eines Verbindungskabels zum Verbinden mit einer weiteren Automatisierungskomponente, insbesondere einer Antriebseinheit, besitzt
und wobei dieses Verbindungskabel zusätzlich für die Übertragung weiterer Steuer- und/oder Leistungssignale verwendbar ist. Von Vorteil ist dabei, dass der ortsgebundene Bezug des Schlüsselspeichers implizit durch die Installation in der Anlage gegeben ist. Dadurch können nur die Konfigurationsdaten für die an diesem Verbindungskabel angeschlossenen Geräte geladen werden.

Bei einer vorteilhaften Ausgestaltung ist der Schlüsselspeicher innerhalb einer Antriebseinheit integriert, insbesondere steckbar integriert, ausgeführt,
wobei diese Antriebseinheit weitere Sensoren und/oder Aktoren beinhaltet, insbesondere einen Motor (M) und/oder einen Drehgeber und/oder einen Streckengeber und/oder eine Bremse und/oder einen Temperatursensor,
wobei diese Antriebseinheit ein Steckverbinderelement aufweist,
wobei der Schlüsselspeicher über dieses Steckverbinderelement, insbesondere über eine Verbindungsleitung, direkt mit der Steuerungseinheit verbindbar ist
und wobei dieses Verbindungskabel zusätzlich für die Übertragung weiterer Steuer- und/oder Leistungssignale verwendbar ist. Von Vorteil ist dabei, dass der ortsgebundene Bezug des Schlüsselspeichers implizit durch die Installation in der Anlage gegeben ist. Dadurch können nur die passenden Konfigurationsdaten für diese Antriebseinheit geladen werden.

Bei einer vorteilhaften Ausgestaltung ist der Schlüsselspeicher von der Steuerungseinheit über eine elektrisch leitende Verbindung, die aus nur zwei Leitungen besteht, insbesondere die als Eindraht-Bus und/oder mit einem Koaxialkabel mit nur einem Innenleiter realisiert ist, auslesbar. VORTEIL: Dadurch ist eine platzsparende und kostengünstige Realisierung des Schlüsselspeichers mit einem reduzierten Verdrahtungsaufwand bei gleichzeitigem Schutz gegen Störeinstrahlung auf der Verbindungsleitung möglich.

Bei einer vorteilhaften Ausgestaltung ist der Schlüsselspeicher über ein Mittel, insbesondere einer Verbindungskette, fest mit dem Ort verbindbar, an dem auch die Steuerungseinheit im Gesamtsystem installiert ist. Von Vorteil ist dabei, dass der ortsgebundene Bezug des Schlüsselspeichers innerhalb des Gesamtsystems betont wird und zusätzlich ein Schutz vor Verlust des Schlüsselspeichers selbst realisierbar ist.

Bei einer vorteilhaften Ausgestaltung ist der externe Datenspeicher direkt über ein Steckverbinderelement mit einer übergeordneten Steuerung verbindbar,
wobei die übergeordnete Steuerung mit der Steuerungseinheit über ein Feldbussystem verbindbar ist. Von Vorteil ist dabei, dass es möglich ist, mit nur einem externen Speicher eine Vielzahl von Steuerungseinheiten zu bedienen.

Bei einer vorteilhaften Ausgestaltung ist das Geräteidentifikationsmerkmal als eine EAN (European Article Number) und/oder GTIN (Global Trade Item Number) ausgeführt. Von Vorteil ist dabei, dass der Gerätetyp der Steuerungseinheit eindeutig identifizierbar ist.

Von Vorteil bei dem erfindungsgemäßen Verfahren ist, dass die automatische Wiederherstellung der Konfigurationsdaten einer Steuerungseinrichtung ohne Einwirkung des Anwenders nach einem Gerätetausch möglich ist.

Bei einer vorteilhaften Ausgestaltung befindet sich die Steuerungseinheit nach einem Neustart und/oder Erstinbetriebnahme in einem Fehlerzustand,
wobei die Steuerungseinheit die Identifikationsinformation vom Schlüsselspeicher liest,
wobei die Steuerungseinheit sowohl diese Identifikationsinformation als auch das Geräteidentifikationsmerkmal dazu verwendet, um auf dem externen Datenspeicher nach einem passenden Parameterdatensatz zu suchen, der mit den beiden Identifikationsinformationen und verknüpft ist,
wobei ein vorhandener passender Parameterdatensatz vom externen Datenspeicher in den Speicherbereich der Steuerungseinheit kopiert wird,
wobei die Steuerungseinheit mit dem kopierten Parameterdatensatz vom Fehlerzustand aus in den Betriebszustand wechselt,
wobei bei einem nicht vorhandenen passenden Parameterdatensatz auf dem externen Datenspeicher die Steuerungseinheit im Fehlerzustand bleibt. Von Vorteil ist dabei, dass die automatische Wiederherstellung der Konfigurationsdaten mehrerer Steuerungseinrichtungen mit nur einem Schlüsselspeicher ohne Einwirkung des Anwenders nach einem Gerätetausch möglich ist.

Erfindungsgemäß wird eine defekte Steuerungseinheit aus der Anlage entfernt,
wobei der Schlüsselspeicher von der defekten Steuerungseinheit entfernt und mit der neuen getauschten Steuerungseinheit verbunden wird,
wobei die neue getauschte Steuerungseinheit dieselbe Funktion an genau derselben Stelle in der Anlage einnimmt, die die defekte Steuerungseinheit innehatte. Von Vorteil ist dabei, dass die externe Identifikationsinformation ortsgebunden ist, wodurch nach einem Gerätetausch der Bezug im Gesamtsystem zur Wiederherstellung der benötigten Konfigurationsdaten hergestellt werden kann.

Bei einer vorteilhaften Ausgestaltung sucht nach jedem Neustart die Steuerungseinheit auf dem externen Datenspeicher nach einem passenden Parameterdatensatz und ein vorhandener passender Parameterdatensatz wird vom externen Datenspeicher in den Speicherbereich der Steuerungseinheit kopiert. Von Vorteil ist dabei, dass die Konfigurationsdaten unabhängig von der Steuerungseinheit sind, da die Konfigurationsdaten nicht in der Steuerungseinheit selbst abgelegt sind, sondern bei Bedarf geladen werden können.

Bei einer vorteilhaften Ausgestaltung ist der Speicherbereich der Steuerungseinheit als nichtflüchtiger Speicher, insbesondere als EEPROM, Flash oder vergleichbarem dem Stand der Technik entsprechenden, realisiert,
wobei bei einem Neustart ein vorhandener passender Parameterdatensatz aus dem externen Datenspeicher nur dann geholt wird, wenn der Speicherbereich keinen Parameterdatensatz enthält und/oder der im Speicherbereich enthalten Parameterdatensatz defekt ist,
wobei ein defekter Parameterdatensatz durch Vergleich mit der Identifikationsinformation, insbesondere durch einen Prüfsummenvergleich des Parameterdatensatzes mit der Identifikationsinformation, erkannt wird. Von Vorteil ist dabei, dass ein Zugriff auf den externen Datenspeicher nur im Notfall erfolgen muss und dann damit die Busbelastung reduzierbar ist.

Bei einer vorteilhaften Ausgestaltung ist der Speicherbereich der Steuerungseinheit als nichtflüchtiger Speicher, insbesondere als EEPROM, Flash oder vergleichbarem dem Stand der Technik entsprechenden, realisiert,
wobei bei einem Neustart ein vorhandener passender Parameterdatensatz aus dem externen Datenspeicher nur dann geholt wird, wenn der Speicherbereich keinen Parameterdatensatz enthält und/oder der im Speicherbereich enthalten Parameterdatensatz defekt ist,
wobei ein defekter Parameterdatensatz durch Vergleich mit sowohl der Identifikationsinformation als auch mit dem Geräteidentifikationsmerkmal, insbesondere durch einen Prüfsummenvergleich des Parameterdatensatzes mit sowohl der Identifikationsinformation als auch mit dem Geräteidentifikationsmerkmal, erkannt wird. Von Vorteil ist dabei, dass ein Zugriff auf den externen Datenspeicher nur im Notfall erfolgen muss und damit die Busbelastung reduzierbar ist.

Bei einer vorteilhaften Ausgestaltung ist mit einem Schlüsselspeicher und der darin enthaltenen Identifikationsinformation ein Parameterdatensatz verknüpfbar und auf dem externen Datenspeicher ablegbar,
und mit einem Schlüsselspeicher und der darin enthaltenen Identifikationsinformation ein Parameterdatensatz verknüpfbar und ebenfalls auf dem externen Datenspeicher ablegbar ist,
wobei die Wahl des direkt mit der Steuerungseinheit elektrisch verbundenen Schlüsselspeichers oder, insbesondere bei einem Neustart der Steuerungseinheit, zum Laden des entsprechenden angepassten Parameterdatensatzes oder vom externen Datenspeicher in die Steuerungseinheit führt. Von Vorteil ist dabei, dass die Betriebsart der Steuerungseinheit über verschiedene externe und ortsgebundene Schlüsselspeicher auswählbar ist, wodurch vorgefertigte, insbesondere bereits validierte, Datensätze von einem externen Datenspeicher, insbesondere von einer CLOUD, für die Steuerungseinheit zugänglich sind.

Weitere Vorteile ergeben sich aus den Unteransprüchen.

Ein System zur Ausführung der Erfindung wird nun anhand von Abbildungen näher erläutert:

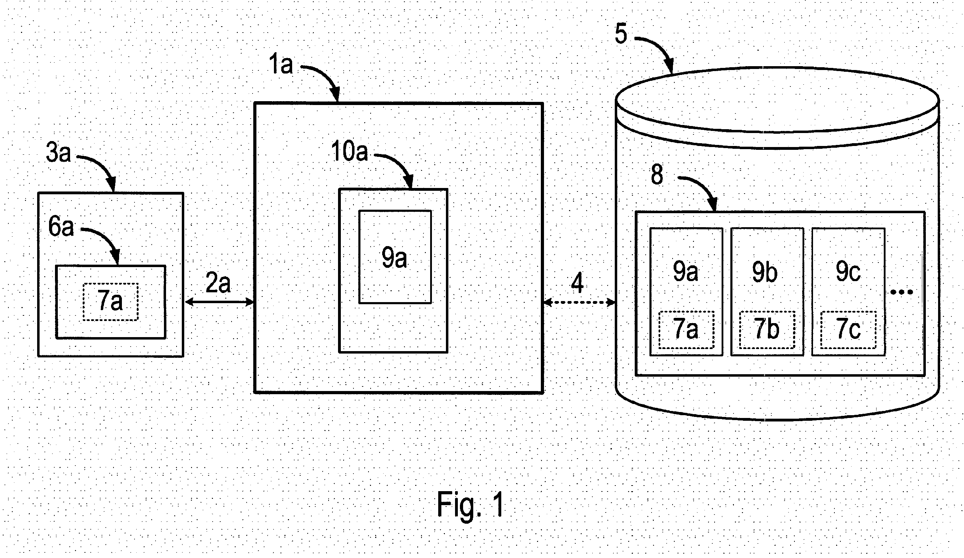

In Figur 1 ist ein System aus Automatisierungskomponenten beispielhaft skizziert. Die Steuerungseinheit (1a) ist hierbei über eine direkt zuordenbare elektrisch leitende Verbindung (2a) an den Schlüsselspeicher (3a) angebunden. Somit kann die Steuerungseinheit (1a) lediglich auf die im nichtflüchtigen Speicherbereich (6a) befindliche Identifikationsinformation (7a) des Schlüsselspeichers (3a) zugreifen.

Die Steuerungseinheit (1a) ist ferner direkt oder über ein Netzwerk (4) mit einem externen Datenspeicher (5) verbunden. Dieser Datenspeicher (5) stellt in seinem nichtflüchtigen Speicherbereich (8) Platz für Parameterdatensätze (9), die insbesondere mit Identifikationsinformationen (7) verknüpft sind, zur Verfügung. Beispielhaft wurde über ein Mittel, insbesondere ein Parametriergerät, bei Erstinbetriebnahme und/oder bei jeder weiteren Änderung des Parameterdatensatzes (9a) dieser Parameterdatensatz (9a) sowohl in den Speicherbereich (10a) der Steuerungseinheit (1a) als auch als Schattenkopie in den nichtflüchtigen Speicherbereich (8) des externen Datenspeichers (5) übertragen.

Mittels der Identifikationsinformation (7a) des Schlüsselspeichers (3a) ist die Steuerungseinheit (1a) in der Lage, im externen Datenspeicher (5) nach dem passenden Parameterdatensatz (9a) zu suchen und diesen bei erfolgreicher Suche in den internen Speicherbereich (10a) zu laden.

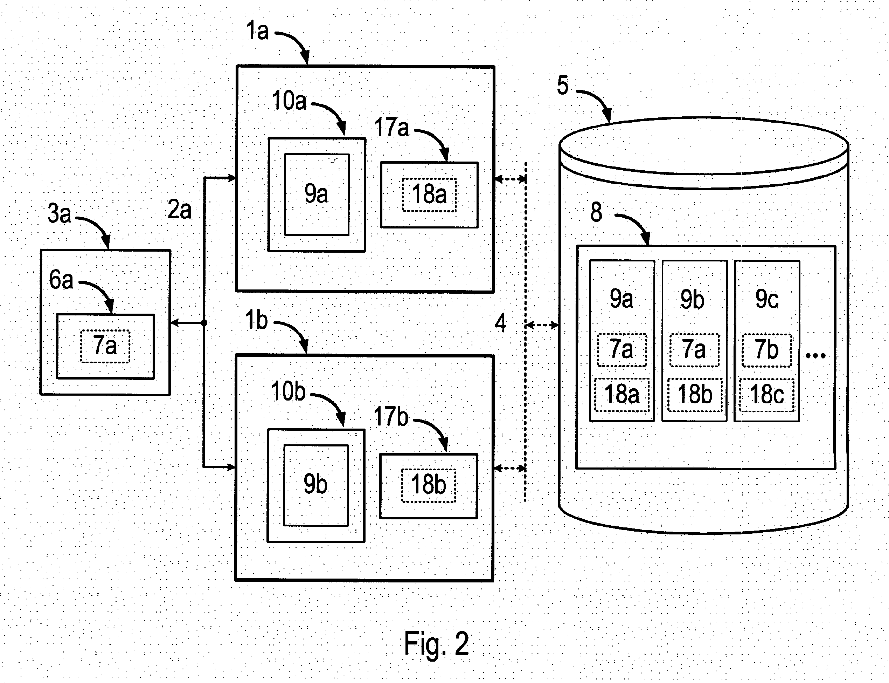

In Figur 2 ist ein weiteres System aus Automatisierungskomponenten beispielhaft skizziert. Der Schlüsselspeicher (3a) ist hier über eine direkt zuordenbare elektrisch leitende Verbindung (2a) mit den Steuerungseinheiten (1a) und (1b) verbunden. Somit haben die Steuerungseinheiten (1a) und (1b) nur Zugriff auf die Identifikationsinformation (7a) genau eines Schlüsselspeichers (3a).

Jede Steuerungseinheit (1a, 1b) besitzt zusätzlich ein Geräteidentifikationsmerkmal (18a, 18b), wobei diese Geräteidentifikationsmerkmale (18) mit den Parameterdatensätzen (9) verknüpft sind und zusammen mit der Identifikationsinformation (7a) für die Auswahl des passenden Parameterdatensatzes (9a, 9b) im externen Datenspeicher (5) verwendet wird.

Ein weiteres denkbares Ausführungsbeispiel ist, dass die Steuerungseinheit (1a) über eine direkt zuordenbare elektrisch leitende Verbindung (2a) an den Schlüsselspeicher (3a) angebunden ist und die darin enthaltene Identifikationsinformation (7a) über die Steuerungseinheit (1a) einer weiteren Steuerungseinheit (1b) über eine direkt zuordenbare elektrisch leitende Verbindung zwischen Steuerungseinheit (1a) und Steuerungseinheit (1b) zur Verfügung stellt.

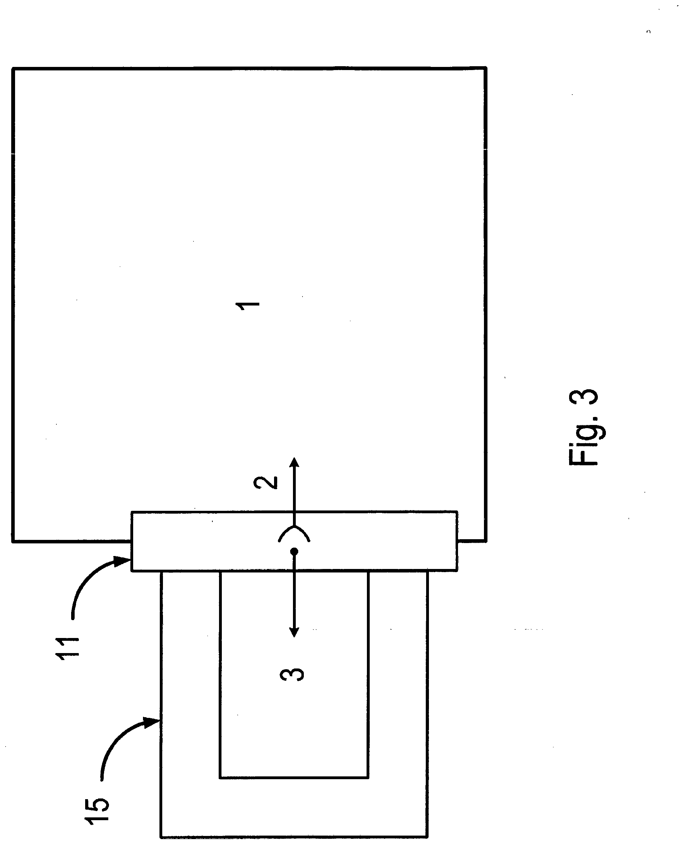

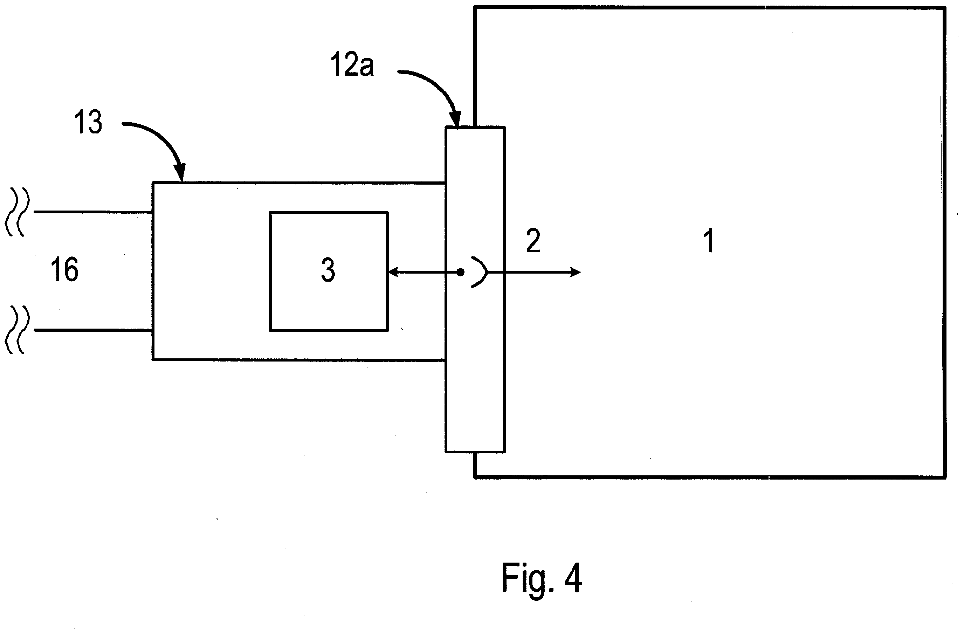

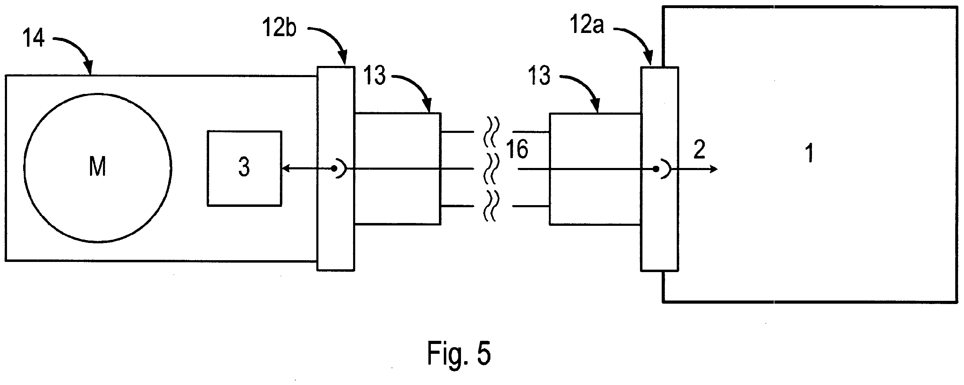

Die Figuren 3, 4 und 5 zeigen beispielhaft mechanische Ausprägungen der direkt zuordenbaren elektrisch leitenden Verbindung (2) zwischen Steuerungseinheit (1) und Schlüsselspeicher (3).

In Figur 3 ist ein separat ausgeführter Schlüsselspeicher (3), insbesondere als eine in einem Dongle-Gehäuse (15) integrierte Schaltung, aufgezeigt. Der ortsgebundene Bezug des Schlüsselspeichers (3) muss in dieser Anwendung durch organisatorische Maßnahmen garantiert werden.

In Figur 4 ist der Schlüsselspeicher (3) als eine in einem Anschlussstecker (13) einer Verbindungsleitung (16) integrierte Schaltung dargestellt. Damit ist der ortsgebundene Bezug des Schlüsselspeichers (3) implizit durch die Installation des Verbindungskabels (16) in einer Anlage garantiert. *

In Figur 5 ist der Schlüsselspeicher (3) als eine in einer Antriebseinheit (14) integrierte Schaltung skizziert. Damit ist der ortsgebundene Bezug des Schlüsselspeichers (3) implizit durch die Installation der Antriebseinheit (14) in einer Anlage garantiert. Gleichzeitig wird in dieser Anwendung garantiert, dass nur der für diese Antriebseinheit (14) bestimmte Parameterdatensatz (9) in die daran angeschlossene Steuerungseinheit (1) geladen wird.

### Bezugszeichenliste:

- (1): Steuerungseinheit
- (2): Direkt zuordenbare elektrisch leitende Verbindung zwischen Steuerungseinheit (1) und Schlüsselspeicher (3)
- (3): Ortsgebundener Schlüsselspeicher
- (4): Verbindung zwischen externem Datenspeicher (5) und Steuerungseinheit (1)
- (5): Externer Datenspeicher
- (6): Nichtflüchtiger Speicherbereich des ortsgebundenen Schlüsselspeichers (3)
- (7): Identifikationsinformation
- (8): Nichtflüchtiger Speicherbereich des externen Datenspeichers (5)
- (9): Parameterdatensatz der Steuerungseinheit (1)
- (10): Speicherbereich der Steuerungseinheit (1)
- (11): Steckverbinder zwischen Steuerungseinheit (1) und Schlüsselspeicher (3)
- (12): Steckverbindung zum Anschluss eines ortsgebundenen Verbindungskabels
- (13): Anschlussstecker eines Verbindungskabels
- (14): Antriebseinheit mit integrierten Sensoren und Aktoren
- (15): Gehäuse, insbesondere ein Dongle-Gehäuse
- (16): Verbindungsleitung, insbesondere für die Übertragung weiterer Steuer- und/oder Leistungssignale
- (17): Weiterer nichtflüchtiger Speicherbereich der Steuerungseinheit (1)
- (18): Geräteidentifikationsmerkmal
- (M): Motor

## Patentansprüche

1. Verfahren zum Betreiben eines Systems von Automatisierungskomponenten einer Produktionsanlage,
wobei das System aufweist:
- eine erste Steuerungseinheit (1a), wobei diese erste Steuerungseinheit (1a) einen Speicherbereich (10a) enthält, welcher einen Parameterdatensatz (9a) beinhaltet, wobei dieser Parameterdatensatz (9a) zum Betreiben dieser ersten Steuerungseinheit (1a) benötigt wird, wobei die Steuerungseinheit in einem Speicherbereich das Geräteidentifikationsmerkmal der Steuerungseinheit bereithält
- eine zweite Steuerungseinheit, die einen Speicherbereich enthält, wobei dieser Speicherbereich das Geräteidentifikationsmerkmal der Steuerungseinheit beinhaltet,
- wobei die beiden Steuerungseinheiten von unterschiedlichem Gerätetyp sind, wobei jedem dieser Gerätetypen eindeutig ein Geräteidentifikationsmerkmal zugeordnet ist, und wobei die Geräteidentifikationsmerkmale verschieden sind,
- einen Schlüsselspeicher (3a), der über eine eindeutig zuordenbare elektrisch leitende-Verbindung (2a) mit den Steuerungseinheiten (1a) verbunden ist, wobei der Schlüsselspeicher (3) von den Steuerungseinheiten (1) über eine elektrisch leitende Verbindung bestehend aus nur zwei Leitungen auslesbar ist,
wobei der Schlüsselspeicher (3a) ortsgebunden und räumlich mit einem spezifischen Punkt in der Produktionsanlage fest zuordenbar, ist,
wobei der Schlüsselspeicher (3) in einem separaten Gehäuse (15) ausgeführt ist,
wobei der Schlüsselspeicher (3) über ein Mittel fest mit dem Ort verbunden ist, an dem auch die erste Steuerungseinheit (1) der Produktionsanlage installiert ist,
wobei der Schlüsselspeicher (3a) mindestens einen nichtflüchtigen Speicherbereich (6a) besitzt,
wobei dieser Speicherbereich (6a) eine eindeutige Identifikationsinformation (7a) beinhaltet,
wobei diese Identifikationsinformation (7a) von den Steuerungseinheiten (1a) auslesbar ist,
- und einen externen Datenspeicher (5), auf den direkt zugreifbar ist,
wobei dieser Datenspeicher (5) mindestens einen nichtflüchtigen Speicherbereich (8) besitzt,
wobei dieser Speicherbereich (8) mindestens einen Parameterdatensatz (9a) beinhaltet,
wobei jeder der Parameterdatensätze (9) mit je einer Identifikationsinformation (7) und einem Geräteidentifikationsmerkmal eindeutig verknüpft ist,
und wobei Daten, welche mittels der Identifikationsinformation (7a) des Schlüsselspeichers (3a) von den Steuerungseinheiten (1a) im externen Datenspeicher (5) nach dem passenden Parameterdatensatz (9a) suchbar sind, zwischen den Steuerungseinheiten (1a) und dem externen Datenspeicher (5) austauschbar sind,
wobei folgende Verfahrensschritte ausgeführt werden:
- Entfernen der ersten Steuerungseinheit (1),
- Entfernen des Schlüsselspeicher (3a) von der ersten Steuerungseinheit (1) und Verbinden mit der zweiten Steuerungseinheit (1),
- wobei die zweite Steuerungseinheit (1) dieselbe Funktion an genau derselben Stelle in der Produktionsanlage einnimmt, die die erste Steuerungseinheit (1) innehatte,
- Versetzen der zweiten Steuerungseinheit (1) in einen Fehlerzustand,
- Lesen der Identifikationsinformation (7a) vom Schlüsselspeicher (3a) durch die zweite Steuerungseinheit (1), um auf dem externen Datenspeicher (5) nach einem passenden Parameterdatensatz (9) zu suchen, der mit der Identifikationsinformation (7a, 18) und dem Geräteidentifikationsmerkmal verknüpft ist,
- Kopieren eines vorhandenen passenden Parameterdatensatzes (9) vom externen Datenspeicher (5) in den Speicherbereich (10) der zweiten Steuerungseinheit (1),
- Wechseln der zweiten Steuerungseinheit (1) mit dem kopierten Parameterdatensatz (9) vom Fehlerzustand aus in den Betriebszustand,
wobei bei einem nicht vorhandenen passenden Parameterdatensatz (9) auf dem externen Datenspeicher (5) die Steuerungseinheit (1) im Fehlerzustand bleibt.

2. Verfahren nach Anspruch 1,
**dadurch gekennzeichnet, dass**
der Speicherbereich (10) der Steuerungseinheit (1) als nichtflüchtiger Speicher, insbesondere als EEPROM, Flash oder vergleichbarem dem Stand der Technik entsprechenden, realisiert ist,
wobei bei einem Neustart ein vorhandener passender Parameterdatensatz (9) aus dem externen Datenspeicher (5) nur dann geholt wird, wenn der Speicherbereich (10) keinen Parameterdatensatz enthält und/oder der im Speicherbereich (10) enthalten Parameterdatensatz (9) defekt ist,
wobei ein defekter Parameterdatensatz (9) durch Vergleich mit der Identifikationsinformation (7), insbesondere durch einen Prüfsummenvergleich des Parameterdatensatzes (9) mit der Identifikationsinformation (7), erkannt wird.

3. Verfahren nach Anspruch 1 oder 2,
**dadurch gekennzeichnet, dass**
der Speicherbereich (10) der Steuerungseinheit (1) als nichtflüchtiger Speicher, insbesondere als EEPROM, Flash oder vergleichbarem dem Stand der Technik entsprechenden, realisiert ist,
wobei bei einem Neustart ein vorhandener passender Parameterdatensatz (9) aus dem externen Datenspeicher (5) nur dann geholt wird, wenn der Speicherbereich (10) keinen Parameterdatensatz enthält und/oder der im Speicherbereich (10) enthalten Parameterdatensatz (9) defekt ist,
wobei ein defekter Parameterdatensatz (9) durch Vergleich mit sowohl der Identifikationsinformation (7) als auch mit dem Geräteidentifikationsmerkmal (18), insbesondere durch einen Prüfsummenvergleich des Parameterdatensatzes (9) mit sowohl der Identifikationsinformation (7) als auch mit dem Geräteidentifikationsmerkmal (18), erkannt wird.

4. Verfahren nach Anspruch 1, 2 oder 3, **dadurch gekennzeichnet, dass** mit einem Schlüsselspeicher (3a) und der darin enthaltenen Identifikationsinformation (7a) ein Parameterdatensatz (9a) verknüpft und auf dem externen Datenspeicher (5) abgelegt ist, und mit einem Schlüsselspeicher (3b) und der darin enthaltenen Identifikationsinformation (7b) ein Parameterdatensatz (9b) verknüpft und ebenfalls auf dem externen Datenspeicher (5) abgelegt ist, wobei die Wahl des direkt mit der Steuerungseinheit (1a) elektrisch verbundenen Schlüsselspeichers (3a) oder (3b), insbesondere bei einem Neustart der Steuerungseinheit (1a), zum Laden des entsprechenden angepassten Parameterdatensatzes (9a) oder (9b) vom externen Datenspeicher (5) in die Steuerungseinheit (1a) führt.

## Claims

1. A method of operating a system of automation components of a production plant, wherein the system has:
- a first control unit (1a), wherein this first control unit (1a) comprises a memory region (10a) which contains a parameter data set (9a), wherein this parameter data set (9a) is required to operate this first control unit (1a), wherein the apparatus identification feature of the control unit is kept available in a memory region of the control unit,
- a second control unit which comprises a memory region, wherein this memory region contains the apparatus identification feature of the control unit,
- wherein the two control units are of different apparatus type, wherein an apparatus identification feature is uniquely assigned to each of these apparatus types, and wherein the apparatus identification features differ,
- a key memory (3a) which is connected to the control units (1a) via a clearly assignable, electrically conductive connection (2a), wherein the key memory (3) can be read by the control units (1) via an electrically conductive connection consisting of only two lines, wherein the key memory (3a) is fixed at a certain site and is spatially definitely attributable to a specific point in the production plant, wherein the key memory (3) is in a separate housing (15), wherein the key memory (3) is securely connected via a means to the site at which the first control unit (1) of the production plant is also installed, wherein the key memory (3a) possesses at least one non-volatile memory region (6a), wherein this memory region (6a) contains unique identification information (7a), wherein this identification information (7a) can be read by the control units (1a),
- and an external data memory (5) which is directly accessible, wherein this data memory (5) possesses at least one non-volatile memory region (8), wherein this memory region (8) contains at least one parameter data set (9a), wherein each of the parameter data sets (9) is uniquely linked with respective identification information (7) and an apparatus identification feature, and wherein data, searchable in the external data memory (5) by the control units (1a) for the appropriate parameter data set (9) by means of the identification information (7a) of the key memory (3a), is exchangeable between the control units (1a) and the external data memory (5),
wherein the following method steps are carried out:
- removal of the first control unit (1),
- removal of the key memory (3a) from the first control unit (1) and connection to the second control unit (1),
- wherein the second control unit (1) assumes the same function at exactly the same production-plant location which the first control unit (1) occupied,
- putting of the second control unit (1) into an error state,
- reading of the identification information (7a) from the key memory (3a) by the second control unit (1), in order to search on the external data memory (5) for an appropriate parameter data set (9) which is linked to the identification information (7a) and to the apparatus identification feature (18),
- copying of an available appropriate parameter data set (9) from the external data memory (5) into the memory region (10) of the second control unit (1),
- changing of the second control unit (1) with the copied parameter data set (9) from the error state into the operating state, wherein when an appropriate parameter data set (9) is not available on the external data memory (5), the control unit (1) remains in the error state.

2. A method according to claim 1,
**characterised in that**
the memory region (10) of the control unit (1) is realised as a non-volatile memory, in particular as an EEPROM, Flash or equivalent corresponding to the prior art, wherein in the event of a restart, an available appropriate parameter data set (9) is only retrieved from the external data memory (5) when the memory region (10) does not contain a parameter data set and/or the parameter data set (9) contained in the memory region (10) is defective, wherein a defective parameter data set (9) is recognized by comparison to the identification information (7), in particular by a checksum comparison of the parameter data set (9) to the identification information (7).

3. A method according to claim 1 or 2,
**characterised in that**
the memory region (10) of the control unit (1) is realised as a non-volatile memory, in particular as an EEPROM, Flash or equivalent corresponding to the prior art, wherein in the event of a restart, an available appropriate parameter data set (9) is only retrieved from the external data memory (5) when the memory region (10) does not contain a parameter data set and/or the parameter data set (9) contained in the memory region (10) is defective, wherein a defective parameter data set (9) is recognized by comparison to the identification information (7) and to the apparatus identification feature (18), in particular by a checksum comparison of the parameter data set (9) to the identification information (7) and to the apparatus identification feature (18).

4. A method according to claim 1,2 or 3,
**characterised in that** a parameter data set (9a) can be linked to a key memory (3a) and the identification information (7a) contained therein and can be stored on the external data memory (5), and a parameter data set (9b) can be linked to a key memory (3b) and the identification information (7b) contained therein and likewise can be stored on the external data memory (5), wherein the selection of the key memory (3a) or (3b) directly electrically connected to the control unit (1a), in particular in the event of a restart of the control unit (1a), leads to the uploading of the appropriate, matched parameter data set (9a) or (9b) from the external data memory (5) into the control unit (5a).

## Revendications

1. Procédé d'exploitation d'un système de composants d'automatisation d'une installation de production,
ledit système comprenant :
- une première unité de commande (1a), cette première unité de commande (1a) renfermant une zone de mémorisation (10a) qui contient un jeu (9a) de données de paramètres, ce jeu (9a) de données de paramètres étant requis pour l'actionnement de cette première unité de commande (1a), laquelle unité de commande tient en attente, dans une zone de mémorisation, l'identifiant d'appareil de ladite unité de commande,
- une seconde unité de commande renfermant une zone de mémorisation, cette zone de mémorisation contenant l'identifiant d'appareil de ladite unité de commande,
- les deux unités de commande présentant des types d'appareils différents, un identifiant d'appareil étant affecté de manière univoque à chacun de ces types d'appareils, et les identifiants d'appareils étant différents,
- une mémoire de clés (3a), connectée aux unités de commande (1a) par l'intermédiaire d'une jonction (2a) électriquement conductrice pouvant être affectée de manière univoque, ladite mémoire de clés (3) pouvant être lue, par les unités de commande (1), par l'intermédiaire d'une jonction électriquement conductrice constituée de deux conducteurs seulement,
ladite mémoire de clés (3a) pouvant être spatialement associée de manière fixe, avec localisation stationnaire, à un point spécifique dans l'installation de production,
ladite mémoire de clés (3) étant intégrée dans un boîtier distinct (15),
ladite mémoire de clés (3) étant reliée rigidement, par l'intermédiaire d'un moyen, à l'endroit auquel la première unité de commande (1) de ladite installation de production est elle aussi implantée,
ladite mémoire de clés (3a) étant pourvue d'au moins une zone de mémorisation (6a) non volatile,
cette zone de mémorisation (6a) renfermant une information d'identification (7a) univoque,
cette information d'identification (7a) pouvant être lue par les unités de commande (1a),
- et une mémoire de données (5) extérieure, à laquelle il peut être directement accédé,
cette mémoire de données (5) étant dotée d'au moins une zone de mémorisation (8) non volatile,
cette zone de mémorisation (8) contenant au moins un jeu (9a) de données de paramètres,
sachant que chacun des jeux (9a) de données de paramètres est combiné à chaque fois, de manière univoque, à une information d'identification (7) et à un identifiant d'appareil
et sachant que des données, pouvant être recherchées par les unités de commande (1a) dans la mémoire de données (5) extérieure quant au jeu adéquat (9a) de données de paramètres, au moyen de l'information d'identification (7a) de la mémoire de clés (3a), peuvent être échangées entre lesdites unités de commande (1a) et ladite mémoire de données (5) extérieure, sachant qu'il s'opère une exécution des étapes opératoires suivantes, consistant à :
- retirer la première unité de commande (1),
- dissocier la mémoire de clés (3a) d'avec ladite première unité de commande (1), et établir la connexion avec la seconde unité de commande (1),
- laquelle seconde unité de commande (1) remplit, exactement au même emplacement dans l'installation de production, la même fonction que celle que remplissait ladite première unité de commande (1),
- transposer ladite seconde unité de commande (1) à un état d'erreur,
- lire l'information d'identification (7a) de la mémoire de clés (3a) au moyen de ladite seconde unité de commande (1), de manière à rechercher, sur la mémoire de données (5) extérieure, un jeu adéquat (9) de données de paramètres qui est combiné à ladite information d'identification (7a) et à l'identifiant d'appareil (18),
- copier un jeu adéquat existant (9) de données de paramètres dans la zone de mémorisation (10) de ladite seconde unité de commande (1), à partir de ladite mémoire de données (5) extérieure,
- faire passer ladite seconde unité de commande (1), avec le jeu copié (9) de données de paramètres, de l'état d'erreur à l'état fonctionnel,
sachant que ladite unité de commande (1) demeure à l'état d'erreur en l'absence d'un jeu adéquat (9) de données de paramètres sur ladite mémoire de données (5) extérieure.

2. Procédé selon la revendication 1,
**caractérisé par le fait que**
la zone de mémorisation (10) de l'unité de commande (1) se présente concrètement sous la forme d'une mémoire non volatile, notamment en tant qu'EEPROM, que *flash,* ou que dispositif comparable correspondant à l'état de la technique,
sachant que, lors d'un redémarrage, un jeu adéquat existant (9) de données de paramètres est récupéré, de la mémoire de données (5) extérieure, uniquement lorsque ladite zone de mémorisation (10) ne contient aucun jeu de données de paramètres et/ou lorsque le jeu (9) de données de paramètres, renfermé par ladite zone de mémorisation (10), s'avère défectueux,
un jeu défectueux (9) de données de paramètres étant repéré par comparaison avec l'information d'identification (7), en particulier par une comparaison de la somme de contrôle dudit jeu (9) de données de paramètres avec ladite information d'identification (7).

3. Procédé selon la revendication 1 ou 2,
**caractérisé par le fait que**
la zone de mémorisation (10) de l'unité de commande (1) se présente concrètement sous la forme d'une mémoire non volatile, notamment en tant qu'EEPROM, que *flash,* ou que dispositif comparable correspondant à l'état de la technique,
sachant que, lors d'un redémarrage, un jeu adéquat existant (9) de données de paramètres est récupéré, de la mémoire de données (5) extérieure, uniquement lorsque ladite zone de mémorisation (10) ne contient aucun jeu de données de paramètres et/ou lorsque le jeu (9) de données de paramètres, renfermé par ladite zone de mémorisation (10), s'avère défectueux,
un jeu défectueux (9) de données de paramètres étant repéré par comparaison tant avec l'information d'identification (7), qu'avec l'identifiant d'appareil (18), en particulier par une comparaison de la somme de contrôle dudit jeu (9) de données de paramètres tant avec ladite information d'identification (7), qu'avec ledit identifiant d'appareil (18).

4. Procédé selon la revendication 1, 2 ou 3,
**caractérisé par le fait**
**qu'**un jeu (9a) de données de paramètres peut être combiné à une mémoire de clés (3a) et à l'information d'identification (7a) renfermée par cette dernière, et être déposé sur la mémoire de données (5) extérieure,
et un jeu (9b) de données de paramètres peut être combiné à une mémoire de clés (3b) et à l'information d'identification (7b) renfermée par cette dernière, et être pareillement déposé sur ladite mémoire de données (5) extérieure,
sachant que le choix de la mémoire de clés (3a) ou (3b) en liaison électrique directe avec l'unité de commande (1a) se traduit, notamment lors d'un redémarrage de ladite unité de commande (1a), par le chargement du jeu adapté correspondant (9a) ou (9b) de données de paramètres, dans ladite unité de commande (1a), à partir de ladite mémoire de données (5) extérieure.
